# EUROPÄISCHE PATENTSCHRIFT

(11) **EP 3 245 715 B1**
(45) Veröffentlichungstag und Bekanntmachung des Hinweises auf die Patenterteilung: **13.04.2022**
(21) Anmeldenummer: 16701363.0
(22) Anmeldetag: 25.01.2016
(51) Int. Cl.: H02K 9/06, H02K 9/14, H02K 11/33

(54) **ELEKTROMOTOR MIT VERBESSERTER KÜHLUNG**
ELECTRIC MOTOR HAVING IMPROVED COOLING
MOTEUR ÉLECTRIQUE À REFROIDISSEMENT AMÉLIORÉ

(30) Priorität: 09.04.2015 DE 102015105377
(43) Veröffentlichungstag der Anmeldung: 22.11.2017
(73) Patentinhaber: EBM-Papst Mulfingen GmbH&CO. KG, 74673 Mulfingen (DE)
(72) Erfinder: MASCHKE, Matthias, 74635 Kupferzell (DE); MESSERSCHMIDT, Hartmut, Ingelfingen 74653 (DE); SCHAFFERT, Friedrich, 74575 Schrozberg (DE); STRÖBEL, Wolfgang, 74572 Blaufelden (DE); STURM, Michael, 97980 Bad Mergentheim-Rot (DE)
(74) Vertreter: Staeger & Sperling Partnerschaftsgesellschaft mbB
(86) Internationale Anmeldenummer: PCT/EP2016/051414
(87) Internationale Veröffentlichungsnummer: WO 2016/162130

(56) Entgegenhaltungen:
- WO-A1-2015/144733
- DE-A1- 19 636 723
- DE-A1- 19 859 930
- DE-A1-102004 036 281
- DE-U1- 8 709 364
- JP-A- H11 313 465
- US-A- 3 538 361
- US-A1- 2004 256 923

## Beschreibung

Die Erfindung betrifft einen Elektromotor mit einem Elektronikgehäuse und darin integrierter Motorelektronik sowie einem axial zu dem Elektronikgehäuse beabstandet angeordneten Statorgehäuse, die über ein zwei Kühlluftströme erzeugendes Kühlrad unabhängig voneinander gekühlt werden.

Ein solcher Elektromotor ist beispielsweise aus dem deutschen Gebrauchsmuster DE8709364U1 bekannt.

Insbesondere betrifft die Erfindung einen Elektromotor zum Antrieb eines Ventilators.

Der Leistungsbereich sowie die Lebensdauer des Elektromotors bestimmen sich insbesondere auch nach den im Betrieb erreichten Bauteiltemperaturen, vor allem der integrierten Motorelektronik, elektrischen Leistungsbauteile, Lager und Motorantriebsbauteile.

Aus dem Stand der Technik ist bekannt, zur verbesserten Leistungsausnutzung und Verlängerung der Lebensdauer des Motors inklusive seiner Motorwicklung, Lagersysteme und Elektronikbauteile auf der Motorelektronik eine aktive Kühlung vorzusehen. Diese wird insbesondere durch den Einsatz eines Kühlrads erreicht, das einen Kühlluftstrom über die zu kühlenden Bauteile fördert und dabei Wärme abführt. Eine verbesserte Kühlung der temperaturempfindlichen Bauteile des Elektromotors ermöglicht eine Erhöhung des Leistungsbereichs der Bauteile bei vorgegebenen Umgebungstemperaturen beziehungsweise den längeren Einsatz des Motors bei höheren Umgebungstemperaturen.

Beispielsweise offenbart die DE 10 2012 107 109 A1 ein entsprechendes Kühlkonzept für einen Außenläufer-Elektromotor, bei dem über ein Kühlrad aktiv ein Kühlluftstrom über Elektronikgehäuse und Teile des Statorgehäuses gefördert wird. Die beschriebene Lösung funktioniert in der Praxis sehr gut, ist jedoch nicht auf alle Bauarten von Elektromotoren übertragbar und insbesondere dann nicht anwendbar, wenn das Elektronikgehäuse von dem Statorgehäuse axial getrennt verbaut wird.

Weiterer Stand der Technik im vorliegenden technischen Gebiet ist in den Dokumenten US 2004/0256923 A1 und US 3,538,361 offenbart.

Der Erfindung liegt deshalb die Aufgabe zugrunde, einen Elektromotor bereitzustellen, der eine optimierte und voneinander unbeeinflusste aktive Kühlung aller temperaturempfindlichen Bauteile im Bereich des Elektronikgehäuses und Statorgehäuses gewährleistet, selbst wenn dieses axial getrennt verbaut sind, wie dies beispielsweise bei Innenläufer-Motoren häufig der Fall ist. Ferner ist es Aufgabe der Erfindung, einen Motor zu schaffen, dessen Kühlung verbessert und dessen Leistung und Lebensdauer bei gleicher Umgebungstemperatur erhöht wird.

Diese Aufgabe wird durch die Merkmalskombination gemäß Patentanspruch 1 gelöst.

Erfindungsgemäß wird ein Elektromotor vorgeschlagen, der ein Efektronikgehäuse mit darin aufgenommener Motorelektronik und ein axial zu dem Elektronikgehäuse beabstandet angeordnetes Statorgehäuse umfasst. Ein doppelflutiges Kühlrad wird axial zwischen dem Elektronikgehäuse und dem Statorgehäuse angeordnet und erzeugt im Betrieb einen ersten Kühlluftstrom entlang dem Elektronikgehäuse sowie einen zweiten Kühlluftstrom entlang dem Statorgehäuse und zusätzlich oder alternativ entlang einem axial an das Statorgehäuse angrenzenden Lagerschild erzeugt.

Das doppelflutige Kühlrad ist definiert als ein Laufrad, das im Betrieb gleichzeitig zwei Luftströme erzeugt, die entweder aus beiden axialen Richtungen angesaugt und in radialer Umfangsrichtung ausgeblasen oder aus radialer Umfangsrichtung angesaugt und in beide axiale Richtungen ausgeblasen werden. Ein doppelflutiges Kühlrad kann auch durch die unmittelbare Verbindung von zwei herkömmlichen Laufrädern erfolgen. Die Förderrichtung der Kühlluftströme ist dabei abhängig von der Schaufelgeometrie des Kühlrades und/oder dessen Drehrichtung. Der Einsatz des doppelflutigen Kühlrads ermöglicht voneinander getrennte und somit unabhängige Kühlluftströme, die jeweils zur Kühlung von eigenen Bauteilen bzw. Bauteilgruppen eingesetzt werden. Dabei entsteht eine jeweils gesonderte "Motorkühlung" sowie "Elektronikkühlutig", Die Kühlluftströme können unabhängig voneinander und in axial unterschiedliche Richtungen unmittelbar auf die zu kühlenden Bau- und/oder Gehäuseteile gerichtet werden, ohne dass sie vorher bereits an heißen Bauteilen vorbeigeströmt und dadurch vorgewärmt wären. Sie weisen deshalb gegenüber den zu kühlenden Bauteilen jeweils einen maximalen Temperaturunterschied auf und können die größtmögliche Wärmemenge abführen.

Erfindungsgemäß ist der Elektromotor ein Innenläufer-Motor. In seinem Statorgehäuse ist eine Motoreinheit gebildet aus einem Rotor, einem Stator mit einem den Rotor radial umgebenden Statorblechpaket und einer zentralen Antriebswelle angeordnet. Der Innenläufer-Motor bietet gegenüber Außenläufer-Motoren hinsichtlich der Thermik den Vorteil, dass die Wärmemenge des Stators bzw. der Statorwicklung unmittelbar über das Statorgehäuse und nicht über den vergleichsweise längeren Weg einer Statorbuchse abgeführt werden kann. Zudem wird bei einem Innenläufer-Motor der Stator nicht von einer Rotorglocke thermisch gekapselt.

Erfindungsgemäß ist die Motoreinheit an einem Lagerschild aufgenommen ist, der in axialer Richtung an das doppelflutige Kühlrad angrenzt. An dem Lagerschild ist mindestens ein Lager zur Lagerung der Antriebswelle vorgesehen, wobei die Antriebswelle in einer kompakten Bauform den Lagerschild in axialer Richtung durchdringt und im von dem Lagerschild überstehenden Abschnitt mit dem Kühlrad drehfest verbunden ist. Somit wird die Antriebswelle des Elektromotors gleichzeitig genutzt, das integrierte Kühlrad zu betreiben.

Der erfindungsgemäße Elektromotor weist mindestens einen Stator-Kühlkanal auf, der sich in axialer Richtung zumindest abschnittsweise entlang dem Statorgehäuse und dem mindestens einen Lagerschild sowie in radialer Richtung entlang dem mindestens einen Lagerschild bis zu dem Kühlrad erstreckt. Der Stator-Kühlkanal ist mit dem Kühlrad strömungsverbunden und wird im Betrieb von dem ersten, durch das doppelflutige Kühlrad erzeugten Kühlluftstrom durchströmt ("Motorkühlung").

Auf der axial dem Statorgehäuse gegenüberliegenden Seite des Kühlrads weist der Elektromotor erfindungsgemäß mindestens einen Elektronik-Kühlkanal auf, der sich in axialer und radialer Richtung zumindest abschnittsweise entlang dem Elektronikgehäuse bis zu dem Kühlrad erstreckt und mit diesem strömungsverbunden ist. Im Betrieb wird der Elektronik-Kühlkanal von dem zweiten, durch das doppelflutige Kühlrad erzeugten Kühlluftstrom durchströmt ("Elektronikkühlung").

Sowohl bei dem Stator-Kühlkanal als auch dem Elektronik-Kühlkanal erfolgt die Kühlluftströmung in axialer Richtung entlang dem Statorgehäuse bzw. dem Lagerschild und dem Elektronikgehäuse in oder aus Richtung des Kühlrads. Je nach Drehrichtung und Schaufelgeometrie des Kühlrads erfolgt die strömungsrichtungsabhängige Zuströmung des Kühlluftstroms in den axialen Zentralbereich des Kühlrads oder Abströmung des Kühlluftstorms aus dem axialen Zentralbereich des Kühlrads in radialer Richtung und entlang den vorstehend beschriebenen, sich radial erstreckenden Kanälen.

In einer Ausführungsvariante mit axial ansaugendem und radial ausblasendem Kühlrad ist der zur radialen Mitte des Kühlrads verlaufende Abschnitt des Stator-Kühlkanals und/oder des Elektronik-Kühlkanals als Ansaugkanal ausgebildet. Dieser Ansaugkanal ist in einer hinsichtlich hoher Strömungsgeschwindigkeiten und Volumenströme optimierten und vorteilhaften Ausführung mit einer Querschnittsverengung ausgestattet, die als Einströmdüse in einen axialen Ansaugbereich des Kühlrads dient. Neben den leistungstechnischen Verbesserungen reduziert die Einströmdüse zudem die Geräuschentwicklung des Kühlrads beim Ansaugen.

Günstig ist ferner eine Ausführungsvariante der Erfindung, bei der die Motorelektronik auf einer Leiterplatte montiert ist, die in dem Elektronikgehäuse axial an das Kühlrad angrenzend angeordnet ist, der zumindest einen Teil des sich in diesem Bereich in radialer Richtung erstreckenden Elektronik-Kühlkanals bildet. Die Elektronikbauteile sind dabei von dem Elektronikgehäuse umgeben. Der Kühlluftstrom strömt entlang dem Elektronikgehäuse und kühlt mittelbar die Elektronikbauteile auf der Leiterplatte.

In einer Ausführungsform der Erfindung ist der Elektromotor, dadurch gekennzeichnet, dass das Statorgehäuse und/oder das Elektronikgehäuse in Umfangsrichtung von einer Abdeckung umgeben sind, die zumindest abschnittsweise Teile des Stator-Kühlkanals und/oder Elektronik-Kühlkanals bilden. Die jeweiligen Kanäle sind dabei mehrteilig ausgeführt und weisen jeweils eine Innenwand, die durch das Statorgehäuse bzw. Elektronikgehäuse gebildet ist, und eine durch die jeweilige Abdeckung gebildete Außenwand auf. Als Abdeckung können aufgesetzte Metall- oder Kunststoffringe verwendet werden. Anstelle einer Abdeckung sind in einer alternativen Ausführungsvariante das Elektronikgehäuse und/oder das Statorgehäuse einteilig ausgebildet und stellen selbst sowohl die Innenwand als auch die Außenwand des entsprechenden Kühlkanals.

Zur Optimierung der von dem doppelflutigen Kühlrad erzeugten Kühlluftströme weist das Kühlrad in einer Ausführungsvariante auf beiden axialen Außenseiten Deckscheiben auf, welche die Schaufeln zumindest abschnittsweise überdecken. Die Erfindung umfasst unterschiedliche Ausführungen des Kühlrads. In einer Variante weist es gerade Schaufeln auf und ist drehrichtungsunabhängig ausgebildet. In einer alternativen Variante weist es drehrichtungsorientierte gekrümmte Schaufeln auf, über die drückende oder saugende Kühlluftströme festlegbar sind.

Der erfindungsgemäße Elektromotor ist ferner gemäß DIN /IEC EN 60034-Teil 5 nach außen dichtend geschlossen und erfüllt den Standard nach IP-Schutzart IPX4/IPX5 oder höher. Das bedeutet, dass die Motoreinheit über das Statorgehäuse und Lagerschilde sowie die Elektronikbauteile über das Elektronikgehäuse gegenüber der Umgebung abgedichtet getrennt sind und kein Luftaustausch mit Umgebungsluft möglich ist. Die Kühlluftströme können lediglich außen an dem Statorgehäuse und Lagerschilden sowie dem Elektronikgehäuse vorbeigeführt werden. Gleichwohl ist gerade bei der dicht geschlossenen Ausführung die aktive Kühlung gemäß der Erfindung besonders effektiv und von Vorteil.

Erfindungsgemäß sind das Elektronikgehäuse und das Statorgehäuse aus wärmeleitendem Material wie Aluminium-Druckguss oder -Strangguss erzeugt, um möglichst viel Wärme abzuführen.

Zur weiter verbesserten Kühlung sind in einem Ausführungsbeispiel der Erfindung an dem Lagerschild zu der Motoreinheit gerichtete Kühlrippen oder Kühlpins ausgebildet. Diese vergrößern die Oberfläche des Lagerschilds und nehmen größere Wärmemengen der Motoreinheit auf, die wiederum durch den Kühlluftstrom abgeführt wird.

Alle vorstehend beschriebenen Merkmale sind beliebig miteinander kombinierbar, soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1: eine perspektivische Ansicht eines Elektromotors in einem ersten Ausführungsbeispiel;
Fig. 2: eine seitliche Schnittansicht des Elektromotors aus Fig. 1;
Fig. 3: eine perspektivische Ansicht eines Elektromotors in einem zweiten Ausführungsbeispiel;
Fig. 4: eine seitliche Schnittansicht des Elektromotors aus Fig. 2.

Die Figuren sind beispielhaft schematisch. Sie geben Ausführungsbeispiele der Erfindung wieder und dienen zu ihrem besseren Verständnis.

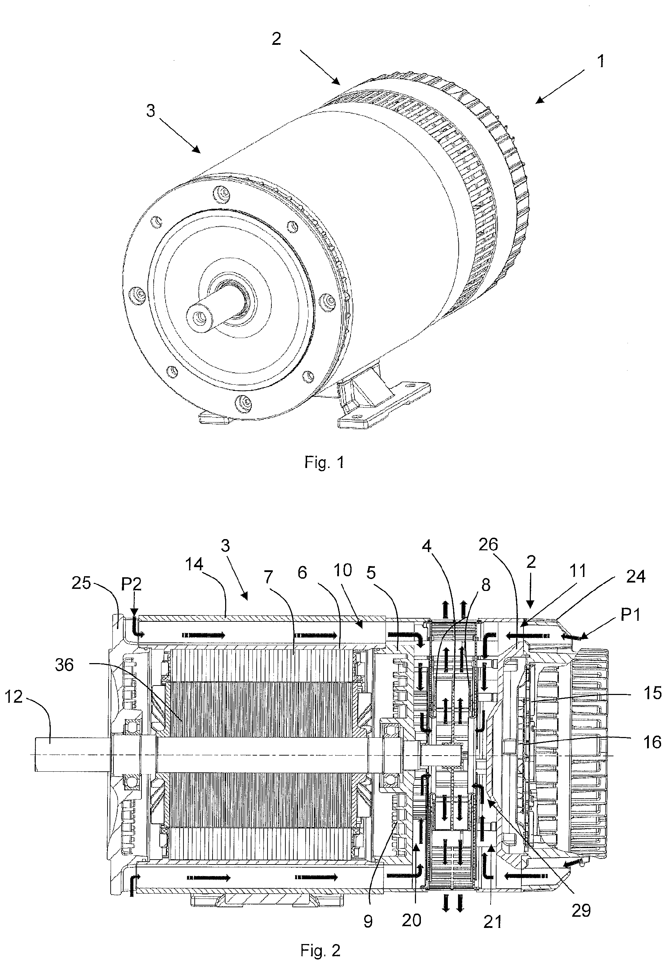

Die Figuren 1 und 2 zeigen einen Elektromotor 1 in einer ersten Ausführungsvariante in einer perspektivischer Ansicht und einer Schnittansicht. Der Elektromotor 1 ist als eine Baueinheit ausgeführt und weist in axialer Richtung gesehen ein Elektronikgehäuse 2, eine doppelflutiges Kühlrad 4 und ein Statorgehäuse 3 auf, wobei das doppelflutige Kühlard 4 axial zwischen dem Elektronikgehäuse 2 und dem Statorgehäuse 3 angeordnet ist und diese voneinander trennt. Der Elektromotor 1 ist ein Innenläufer-Motor, bei dem der Rotor 36 mit einer zentral angeordneten Antriebswelle 12 von dem Statorblechpaket 7 des Stators umgeben ist und darin rotiert. Die Antriebswelle 12 ist zweifach gelagert und erstreckt sich in axialer Richtung von außen durch einen zur Montage des Elektromotors 1 an einem anzutreibenden Apparat vorgesehenen Befestigungsflansch 25, durch den Lagerschild 5 bis zu dem Kühlrad 4, das drehfest auf der Antriebswelle 12 befestigt ist und von dieser angetrieben wird. Zwei Kugellager zur Lagerung der Antriebswelle 12 sind an dem Befestigungsflansch 25 und dem Lagerschild 5 vorgesehen. An dem Lagerschild 5 sind ferner zu dem Statorblechpaket 7 und dem Rotor 36 gerichtete Kühlpins 9 ausgebildet, welche die Oberfläche des Lagerschilds 5 und dessen Wärmeaufnahmekapazität vergrößern.

Das Statorgehäuse 3 umfasst ein Statorgehäuseteil 6, das zusammen mit dem Lagerschild 5 und dem Befestigungsflansch 25 eine nach außen abgedichtete Einheit bilden. Im Inneren dieser Einheit sind die Bauteile der Motoreinheit (Statorblechpaket 7 und Rotor 36) aufgenommen und übertragen die im Motorbetrieb erzeugte Wärme auf das Statorgehäuseteil 6, den Lagerschild 5 und den Befestigungsflansch 25. Der Lagerschild 5 bildet die axiale Grenzfläche gegenüber dem Kühlrad 4. Um das Statorgehäuseteil 6 ist eine Abdeckung 14 in Form eines Ringes angeordnet, innerhalb der ein Stator-Kühlkanal 10 verläuft. Der Stator-Kühlkanal 10 erstreckt sich in axialer Richtung entlang dem Statorgehäuse 3 sowie entlang dem Lagerschild 5 in axialer und zusätzlich in radialer Richtung parallel zum Kühlrad 4.

Das Elektronikgehäuse 2 umfasst ein Elektronikgehäuseteil 26, in dem die Motorelektronik 15 auf einer Leiterplatte 16 aufgenommen ist. Das Elektronikgehäuseteil 26 ist von einer ringförmigen Abdeckung 24 umgeben, so dass dazwischen ein Elektronik-Kühlkanal 11 ausgebildet wird. Der Elektronik-Kühlkanal 11 erstreckt sich in axialer und radialer Richtung entlang dem Elektronikgehäuseteil 26, wobei der sich radial erstreckende Abschnitt parallel zum Kühlrad 4 verläuft.

Im Betrieb werden von dem doppelflutigen Kühlrad 4 ein erster Kühlluftstrom P1 entlang dem Elektronikgehäuse 2 und ein zweiter Kühlluftstrom P2 entlang dem Statorgehäuse 3 und entlang dem axial an das Statorgehäuse 3 angrenzenden Lagerschild 5 erzeugt. Das Kühlrad 4 saugt in der gezeigten Ausführung axial im Zentrumsbereich Luft an und erzeugt dabei die beiden Kühlluftströme P1, P2 durch den Elektronik-Kühlkanal 11 und den Stator-Kühlkanal 10, die schließlich von dem Kühlrad 4 radial ausgeblasen werden. Durch eine Anpassung der Schaufelgeometrie des Kühlrads 4 kann die Luftförderrichtung auch umgekehrt, d.h. drückend ausgeführt werden, wodurch die radial angesaugte Luft weniger turbulent zugeführt und die Geräuschbildung beim Ansaugen verringert wird. In beiden Fällen wird eine Kühlung aller Bauteile durch einen effektiven Wärmeabtransport erreicht.

Sowohl der Stator-Kühlkanal 10 als auch der Elektronik-Kühlkanal 11 weisen einen zu einer radialen Mitte des Kühlrads 4 als Ansaugkanal 20, 21 radial verlaufenden Abschnitt auf. In dem Ansaugkanal wird durch eine entsprechend geformte Kanalwandgeometrie eine Querschnittsverengung 29 realisiert, die eine Einströmdüse in einen axialen Ansaugbereich des Kühlrads 4 bildet. Die Einströmdüse ermöglicht bei einer saugenden Ausbildung des Kühlrads 4 die Nutzung des Düse-/Diffusorprinzips am axialen Kühlradeinlass zu Erhöhung der Strömungsgeschwindigkeit, des Volumenstroms und Reduzierung der Geräuschbildung.

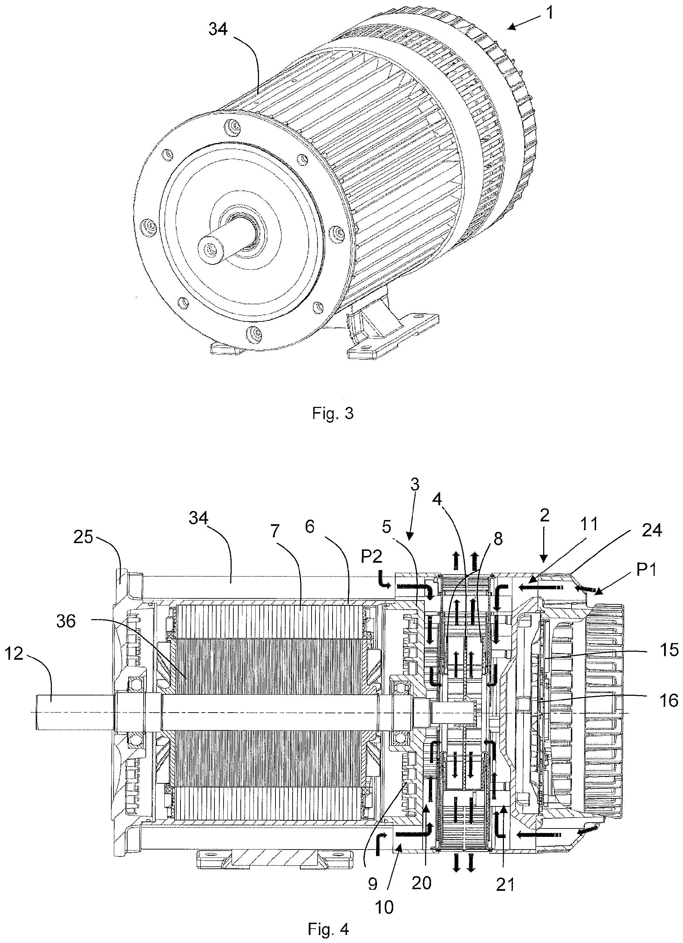

Die Figuren 3 und 4 zeigen ein alternatives Ausführungsbeispiel des Elektromotors 1. Jedoch sind bis auf die im Folgenden beschriebenen alle Merkmale identisch ausgeführt. Im Unterschied zu Ausführung gemäß Figur 1 & 2 ist das Statorgehäuseteil 6 nicht von einer Abdeckung umgeben, jedoch erstrecken sich in axialer Richtung eine Vielzahl von in Umfangsrichtung benachbarten Kühlrippen 34. Der Stator-Kühlkanal 10 verläuft in axialer und radialer Richtung entlang dem Lagerschild 5 bis zu dem Kühlrad 4, jedoch nicht effektiv über das Statorgehäuseteil 6. Der zweite Kühlluftstrom P2 wird im Bereich des Übergangs zwischen Lagerschild 5 und Statorgehäuseteil 6 angesaugt und verläuft im Wesentlichen in radialer Richtung entlang dem Lagerschild 5. Die axiale Erstreckung des Stator-Kühlkanals 10 ist vergleichsweise kürzer.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann sich der Stator-Kühlkanal auch teilweise über das Statorgehäuse und den zum Kühlrad benachbarte angeordneten Lagerschild erstrecken. Auch kann das Statorgehäuseteil und/oder das Elektronikgehäuseteil doppelwandig ausgebildet werden, so dass sich die Kühlkanäle innerhalb der jeweiligen Bauteile erstrecken. Das Gehäuse kann auch insgesamt als einteilige Gehäusekonstruktion ausgeführt werden. Ferner sind alternativ auch Ausführungen von der Erfindung umfasst, bei denen mehrere Kühlkanäle an dem Statorgehäuse und/oder dem Elektronikgehäuse vorgesehen sind, die beispielsweise in Umfangsrichtung verteilt in axialer Richtung verlaufen.

## Patentansprüche

1. Elektromotor umfassend ein Elektronikgehäuse (2) mit darin aufgenommener Motorelektronik (15) und ein axial zu dem Elektronikgehäuse (2) beabstandet angeordnetes Statorgehäuse (3), wobei der Elektromotor als Innenläufer-Motor ausgebildet ist, wobei in dem Statorgehäuse (3) eine Motoreinheit gebildet aus einem Rotor (36), einem Stator mit einem den Rotor (36) umgebenden Statorblechpaket (7) und einer Antriebswelle (12) angeordnet ist, wobei axial zwischen dem Elektronikgehäuse (2) und dem Statorgehäuse (3) ein doppelflutiges Kühlrad (4) angeordnet ist, das im Betrieb einen ersten Kühlluftstrom (P1) entlang dem Elektronikgehäuse (2) und einen zweiten Kühlluftstrom (P2) entlang dem Statorgehäuse (3) und entlang mindestens einem axial an das Statorgehäuse (3) angrenzenden Lagerschild (5) erzeugt, wobei die Motoreinheit an dem mindestens einen Lagerschild (5) aufgenommen ist und der mindestens eine Lagerschild (5) in axialer Richtung an das doppelflutige Kühlrad (4) angrenzt, wobei der Elektromotor **gekennzeichnet ist durch** mindestens einen Stator-Kühlkanal, der sich in axialer Richtung zumindest abschnittsweise entlang dem Statorgehäuse (3) und dem mindestens einen Lagerschild (5) sowie in radialer Richtung entlang dem mindestens einen Lagerschild (5) bis zu dem Kühlrad (4) erstreckt und im Betrieb vom ersten, durch das doppelflutige Kühlrad (4) erzeugten Kühlluftstrom (P1) durchströmt wird, und durch einen Elektronik-Kühlkanal (11), der sich in axialer und radialer Richtung zumindest abschnittsweise entlang dem Elektronikgehäuse (2) bis zu dem Kühlrad (4) erstreckt und im Betrieb vom zweiten, durch das doppelflutige Kühlrad (4) erzeugten Kühlluftstrom (P2) durchströmt wird.

2. Elektromotor nach Anspruch 1, **dadurch gekennzeichnet, dass** das doppelflutige Kühlrad (4) eine Schaufelgeometrie aufweist, die einen axial saugenden und radial blasenden oder axial drückenden und radial saugenden ersten und zweiten Kühlluftstrom (P1, P2) erzeugt.

3. Elektromotor nach Anspruch 1 oder 2, **dadurch gekennzeichnet, dass** die Motorelektronik (15) auf einer Leiterplatte (16) montiert ist, die in dem Elektronikgehäuse (2) axial an das Kühlrad (4) angrenzend angeordnet ist und das Elektronikgehäuse (2) zumindest einen Teil des Elektronik-Kühlkanals (11) bildet.

4. Elektromotor nach zumindest einem der vorigen Ansprüche 1 - 3, **dadurch gekennzeichnet, dass** der Stator-Kühlkanal (10) und/oder der Elektronik-Kühlkanal (11) einen zu einer radialen Mitte des Kühlrads (4) als Ansaugkanal (20, 21) verlaufenden Abschnitt umfassen, der eine Querschnittsverengung (29) aufweist, die als Einströmdüse in einen axialen Ansaugbereich des Kühlrads (4) ausgebildet ist.

5. Elektromotor nach zumindest einem der vorigen Ansprüche 1 - 4, **dadurch gekennzeichnet, dass** das Statorgehäuse (3) und/oder das Elektronikgehäuse (2) in Umfangsrichtung von einer Abdeckung (14, 24) umgeben sind, die zumindest abschnittsweise Teile des Stator-Kühlkanals (10) und/oder Elektronik-Kühlkanals (11) bilden.

6. Elektromotor nach zumindest einem der vorigen Ansprüche, **dadurch gekennzeichnet, dass** das doppelflutige Kühlrad (4) axial beidseitig Deckscheiben (8) aufweist.

7. Elektromotor nach zumindest einem der vorigen Ansprüche, **dadurch gekennzeichnet, dass** das doppelflutige Kühlrad (4) gerade Schaufeln aufweist und drehrichtungsunabhängig ausgebildet ist.

8. Elektromotor nach zumindest einem der vorigen Ansprüche 1 bis 7, **dadurch gekennzeichnet, dass** das doppelflutige Kühlrad (4) drehrichtungsorientierte gekrümmte Schaufeln aufweist.

9. Elektromotor nach zumindest einem der vorigen Ansprüche 1 - 8, **dadurch gekennzeichnet, dass** an dem mindestens einen Lagerschild (5) zu der Motoreinheit gerichtete Kühlrippen oder Kühlpins (9) ausgebildet sind.

10. Elektromotor nach zumindest einem der vorigen Ansprüche 1 - 9, **dadurch gekennzeichnet, dass** die Antriebswelle (12) mit dem Kühlrad (4) drehfest verbunden ist.

## Claims

1. Electric motor comprising an electronics housing (2) with motor electronics (15) placed in it and a stator housing (3) arranged at a distance axially to the electronics housing (2), wherein the electric motor is formed as an internal running motor, whereby a motor unit in the stator housing (3) is formed by a rotor (36), with the stator laminated core (7) surrounding the stator with a rotor (36), and a driveshaft (12), whereby a twin flow cooling wheel (4) is arranged axially between the electronics housing (2) and the stator housing (3), which during operation generates a first cooling air stream (P1) along the electronics housing (2) and a second cooling air stream (P2) along the stator housing (3), and along at least one bearing shield (5) axially adjoining the stator housing (3), wherein the motor unit is taken into the at least one bearing shield (5), and the at least one bearing shield (5) adjoins the twin flow cooling wheel (4) in an axial direction, wherein the electric motor is **characterized by** at least one stator cooling channel, which at least partially extends in an axial direction along the stator housing (3) and along the at least one bearing shield (5) and in a radial direction along the at least one bearing shield (5) to the cooling wheel (4) and in operation is streamed through by said first cooling air stream (P1) generated by said twin flow cooling wheel (4), and by an electronics cooling channel (11), which extends in an axial and radial direction at least partially along said electronics housing (2) up to said cooling wheel (4) and in operation is streamed through by said second cooling air stream (P2) generated by said twin flow cooling wheel (4).

2. Electric motor according to claim 1, so **characterized in that** the twin flow cooling wheel (4) has a blade geometry that generates first and second cooling air streams (P1, P2), which are axially sucking in and radially blowing out or axially pressing and radially sucking in.

3. Electric motor according to claim 1 or 2, so **characterized in that** the motor electronics (15) are mounted on the conductor plate (16), which is arranged axially adjoining the cooling wheel (4) in the electronics housing (2), and the electronics housing (2) is a least one part of the electronics cooling channel (11).

4. Electric motor according to one of the prior claims of 1 to 3, so **characterized in that** the stator cooling channel (10) and/or the electronics cooling channel (11) comprise a section of a sucking in channel (20, 21) running to a radial center of the cooling wheel (4), which has a narrowed cross-section (29), which is formed as an inflowing nozzle in an axial sucking in the area of the cooling wheel (4).

5. Electric motor according to at least one of the prior claims 1 to 4, so **characterized in that** the stator housing (3) and/or the electronics housing (2) are surrounded in the revolving direction by a cover (14, 24), which at least partially forms parts of the stator cooling channel (10) and/or the electronics cooling channel (11).

6. Electric motor according to at least one of the prior claims, so **characterized in that** a twin flow cooling wheel (4) has cover discs (8) axially bilaterally.

7. Electric motor according to at least one the prior claims, so **characterized in that** the twin flow cooling wheel (4) has straight blades and is formed independent of the direction of rotation.

8. Electric motor according to at least one of the prior claims 1 to 7, so **characterized in that** the twin flow cooling wheel (4) has curved blades in the direction of the rotation.

9. Electric motor according to least one of the prior claims 1 to 8, so **characterized in that** on the at least one bearing shield (5) there are cooling ribs or cooling pins of (9) directed toward the motor unit.

10. Electric motor according to least one of the prior claims 1 to 9, so **characterized in that** the driveshaft (12) is attached to the cooling wheel (4) without rotating.

## Revendications

1. Moteur électrique comprenant un boîtier électronique (2) dans lequel est logée une électronique de moteur (15) et un carter de stator (3) disposé axialement à distance du boîtier électronique (2), dans lequel le moteur électrique est conçu comme un moteur à rotor intérieur, dans lequel un groupe moteur formé d'un rotor (36), d'un stator avec un noyau feuilleté (7) entourant le rotor (36) et d'un arbre d'entraînement (12) est disposé dans le carter de stator (3), dans lequel une roue de refroidissement à double flux (4) est disposée axialement entre le boîtier électronique (2) et le carter de stator (3), laquelle roue de refroidissement génère, pendant le fonctionnement, un premier flux d'air de refroidissement (P1) le long du boîtier électronique (2) et un second flux d'air de refroidissement (P2) le long du carter de stator (3) et le long d'au moins un flasque (5) adjacent axialement au carter de stator (3), dans lequel le groupe moteur est logé sur l'au moins un flasque (5) et l'au moins un flasque (5) est adjacent à la roue de refroidissement à double flux (4) dans la direction axiale, dans lequel le moteur électrique est **caractérisé par** au moins un canal de refroidissement de stator qui s'étend dans la direction axiale au moins partiellement le long du carter de stator (3) et de l'au moins un flasque (5) et dans la direction radiale le long de l'au moins un flasque (5) jusqu'à la roue de refroidissement (4) et est traversé, pendant le fonctionnement, par le premier flux d'air de refroidissement (P1) généré par la roue de refroidissement à double flux (4), et **caractérisé par** un canal de refroidissement de l'électronique (11) qui s'étend dans les directions axiale et radiale au moins partiellement le long du boîtier électronique (2) jusqu'à la roue de refroidissement (4) et est traversé, pendant le fonctionnement, par le second flux d'air de refroidissement (P2) généré par la roue de refroidissement à double flux (4),

2. Moteur électrique selon la revendication 1, **caractérisé en ce que** la roue de refroidissement à double flux (4) présente une géométrie d'aube qui produit des premier et second flux d'air de refroidissement (P1, P2) à aspiration axiale et à soufflage radial ou à pression axiale et à aspiration radiale.

3. Moteur électrique selon la revendication 1 ou 2, **caractérisé en ce que** l'électronique de moteur (15) est montée sur une plaquette de circuit imprimé (16) qui est disposée dans le boîtier électronique (2) de manière axialement adjacente à la roue de refroidissement (4) et le boîtier électronique (2) forme au moins une partie du canal de refroidissement de l'électronique (11).

4. Moteur électrique selon au moins l'une des revendications précédentes 1 à 3, **caractérisé en ce que** le canal de refroidissement de stator (10) et/ou le canal de refroidissement de l'électronique (11) comprennent une section s'étendant vers un centre radial de la roue de refroidissement (4) en tant que canal d'aspiration (20, 21), laquelle section présente un rétrécissement de section (29) qui est conçu comme une buse d'entrée dans une zone d'aspiration axiale de la roue de refroidissement (4).

5. Moteur électrique selon au moins l'une des revendications précédentes 1 à 4, **caractérisé en ce que** le carter de stator (3) et/ou le boîtier électronique (2) sont entourés dans le sens circonférentiel par une plaque de recouvrement (14, 24) qui forme au moins partiellement des parties du canal de refroidissement de stator (10) et/ou du canal de refroidissement de l'électronique (11).

6. Moteur électrique selon au moins l'une des revendications précédentes, **caractérisé en ce que** la roue de refroidissement à double flux (4) présente des disques de recouvrement (8) axialement des deux côtés.

7. Moteur électrique selon au moins l'une des revendications précédentes, **caractérisé en ce que** la roue de refroidissement à double flux (4) présente des aubes droites et est conçue pour être indépendante du sens de rotation.

8. Moteur électrique selon au moins l'une des revendications précédentes 1 à 7, **caractérisé en ce que** la roue de refroidissement à double flux (4) présente des aubes incurvées orientées dans le sens de rotation.

9. Moteur électrique selon au moins l'une des revendications précédentes 1 à 8, **caractérisé en ce que** des nervures de refroidissement ou des broches de refroidissement (9) dirigées vers le groupe moteur sont formées sur l'au moins un flasque (5) .

10. Moteur électrique selon au moins l'une des revendications précédentes 1 à 9, **caractérisé en ce que** l'arbre d'entraînement (12) est relié de manière fixe en rotation à la roue de refroidissement (4).
